# EUROPEAN PATENT APPLICATION

(11) **EP 3 210 841 A1**
(43) Date of publication of application: **30.08.2017**
(21) Application number: 16305220.2
(22) Date of filing: 25.02.2016
(51) Int. Cl.: B60S 1/38, B60S 1/48

(54) **BLADE CONNECTOR, WIPER BLADE AND WIPER DEVICE FOR A VEHICLE**

(71) Applicant: Valeo Systèmes d'Essuyage, 78322 Le Mesnil Saint Denis (FR)
(72) Inventor: GRASSO, Giuseppe, 63340 Le Breuil sur Couze (FR); SCHAEUBLE, Michael, 71665 VAIHINGEN/ENZ (DE)
(74) Representative: Vincent, Catherine Marie Marguerite

(57) **Abstract**

The invention relates to a blade connector (5) for connecting a wiper blade (4) to a wiper arm (3) of a vehicle, the blade connector (5) comprising a connector fluid channel (13) for driving a washing fluid into a distal fluid channel (9a) and a proximal fluid channel (9b) of the wiper blade (4) to spread washing fluid from the wiper blade (4) onto a windscreen (1) of a vehicle, the connector fluid channel (13) having :
- an inlet channel (14) which end (14a) is destined to be plugged-in a supplying water hose,
- an outlet distal channel (15) and an outlet proximal channel (16) being respectively arranged along two longitudinal opposite sides of the blade connector (5), and which ends (15a, 16a) are respectively destined to be plugged-in the distal and proximal fluid channels (9a, 9b) of the wiper blade (4),
- wherein the outlet distal channel (15) presents a more important pressure drop than the outlet proximal channel (16).

## Description

The invention relates to a blade connector for connecting a wiper blade to a wiper arm of a vehicle, a wiper blade and a wiper device.

Motor vehicles are commonly equipped with wiper system for wiping and washing the windscreen, preventing the driver's vision of its environment to be disturbed.

Washing liquid may be sprayed onto the windscreen through a nozzle provided in the blade connector which connects the wiper blade to the wiper arm.

Some wiper systems are further provided with at least one washing liquid spraying ramp extending in some cases continuously along the longitudinal axis of the wiper blade. Washing liquid can circulate through the blade connector of the wiper blade and then, exit through the spraying ramp to spread washing fluid.

However, when the wiper blades are activated, the washing liquid could be spread without enough homogeneity onto the windscreen, depending on the side of the connector blade the washing fluid has been sent through.

Indeed, on a wiper blade, the "proximal" part of wiper blade is closer to the pivot axis of the wiper arm than the "distal" part of the wiper blade. Therefore, during wiping cycles, the centrifugal force provided by the pivoting of the wiper arm, influences on the distal part of the wiper blade. The centrifugal forces lead to a larger quantity of washing liquid to be distributed on the distal part of the wiper blade. Therefore, the washing liquid is spread without enough homogeneity. Moreover, the higher the pivoting speed of the wiper blade, the bigger the influence of centrifugal forces on the distal part.

One aim of the present invention is to provide a wiper device which spread washing liquid homogenously on the windscreen.

This object is achieved by a blade connector for connecting a wiper blade to a wiper arm of a vehicle, the blade connector comprising a connector fluid channel for driving a washing fluid into a distal fluid channel and a proximal fluid channel of the wiper blade to spread washing fluid from the wiper blade onto a windscreen of a vehicle, the connector fluid channel having:
- an inlet channel which end is destined to be plugged-in a supplying water hose,
- an outlet distal channel and an outlet proximal channel being respectively arranged along two longitudinal opposite sides of the blade connector, and which ends are respectively destined to be plugged-in the distal and proximal fluid channels of the wiper blade,
- wherein the outlet distal channel presents a more important pressure drop than the outlet proximal channel.

Therefore, the same quantity of washing liquid can be projecting on each side of the wiper blade. Moreover, this is achieved independently of the size of the nozzle openings and their density to distribute the washing fluid. By means of this configuration, the same number of nozzles and the same nozzle diameter in the distal and proximal fluid channels can be kept while providing a better homogenous washing projection.

The blade connector may further comprise one or more features hereafter, taking alone or in combination:
- at least a portion of the outlet distal channel presents a smaller diameter than the outlet proximal channel's diameter,
- the entire outlet distal channel presents a smaller diameter than the outlet proximal channel's diameter,
- the outlet distal channel presents a diameter that is between 1.5 to 3 times smaller than the outlet proximal channel's diameter,
- the connector fluid channel comprises a protuberance projecting into or in front of the outlet distal channel,
- the protuberance is held by a plug of the blade connector which closes an end of a transversal channel of the connector fluid channel linking the inlet channel with the outlet distal and proximal channels,
- the inlet channel extends longitudinally in parallel with the outlet proximal and distal channels, the inlet channel being arranged on the same side of the blade connector than the outlet proximal channel.

Another object of the present invention is a wiper blade comprising a distal and a proximal fluid channels which extend longitudinally and respectively along the two opposite sides of the wiper blade, the distal and proximal fluid channels having nozzles to spread washing fluid from the wiper blade onto a windscreen of a vehicle, wherein the distal fluid channel presents a more important pressure drop than the proximal fluid channel.

The wiper blade may further comprise one or more features hereafter, taking alone or in combination:
- at least a portion of the distal fluid channel presents a smaller diameter than the proximal fluid channel's diameter,
- the entire distal fluid channel presents a smaller diameter than the proximal fluid channel's diameter,
- the distal fluid channel presents a diameter that is between 1.5 to 3 times smaller than the proximal fluid channel's diameter.

Another object of the present invention is a wiper device comprising a blade connector for connecting a wiper blade to a wiper arm, the blade connector comprising a distal and a proximal connector fluid channels for respectively driving a washing fluid into a distal and a proximal fluid channels of the wiper blade having nozzles to spread washing fluid from the wiper blade onto a windscreen of a vehicle, said distal and proximal fluid channels extending longitudinally respectively along two opposite sides of the blade connector, wherein said wiper device also comprises a first and a second pumps for driving a washing fluid from a washing fluid tank to respectively the distal and proximal connector fluid channels of the blade connector, the pumping flowrate of the first pump being less important than the pumping flowrate of the second pump.

The pumping flowrate of the first pump may be between 1.2 and 1.6 smaller than the pumping flowrate of the second pump.

Another object of the present invention is a wiper device comprising a blade connector for connecting a wiper blade to a wiper arm, the blade connector comprising a distal and a proximal connector fluid channels for respectively driving a washing fluid into a distal and a proximal fluid channels of the wiper blade having nozzles to spread a washing fluid from the wiper blade onto a windscreen of a vehicle, said distal and proximal fluid channels extending longitudinally respectively along two opposite sides of the blade connector, wherein said wiper device also comprises a first and a second supplying water hoses for driving a washing fluid from a pump to respectively the distal and proximal connector fluid channels of the blade connector, the first supplying water hose having a pressure drop more important than the second supplying water hose.

The wiper device may further comprise one or more features hereafter, taking alone or in combination:
- at least a portion of the first supplying water hose presents a smaller diameter than the second supplying water hose diameter,
- the entire first supplying water hose presents a smaller diameter than the second supplying water hose's diameter.

Another object of the present invention is a wiper device comprising:
- a wiper blade,
- a blade connector for connecting the wiper blade to a wiper arm, the blade connector comprising one distal connector fluid channel connected to a distal fluid channel of the wiper blade which extends through a first side of the blade connector,
- a proximal end clip comprising :
   - a first fluid channel connected to the distal connector fluid channel via a pipe of the wiper blade for driving a washing fluid to wiper blade, and
   - a second fluid channel connected to a proximal fluid channel of the wiper blade extending longitudinally along a second side of the blade connector opposite to the first side, the distal and proximal fluid channels having nozzles to spread washing fluid from the wiper blade onto a windscreen of a vehicle,
- wherein the first fluid channel presents a more important pressure drop than the second fluid channel.

Further advantages, features and details of the invention will be apparent from the following description of preferred example embodiments and with the aid of the drawings, showing in:
- Figure 1 shows a schematic view of a windscreen of a vehicle with two wiper devices,
- Figure 2 shows a perspective view of a blade connector according to a first embodiment wherein the body of the blade connector is shown by transparency showing a connector fluid channel,
- Figure 3a shows another perspective view of the blade connector of figure 2,
- Figure 3b shows a front view of the blade connector of figure 3a,
- Figure 3c shows a cross-section A-A of the blade connector of figure 3b,
- Figure 3d shows an enlarged view of the blade connector of figure 3c according to the surrounded area B,
- Figure 4 shows a similar view of the blade connector of figure 3d showing another embodiment,
- Figure 5 shows a partial perspective view of a wiper blade according to a second embodiment wherein the body of the blade connector is shown by transparency showing the connector fluid channel,
- Figure 6a shows another partial perspective view of the wiper blade of figure 5,
- Figure 6b shows a front view of the wiper blade of figure 6a,
- Figure 6c shows a cross-section A-A of the wiper blade of figure 6b,
- Figure 7 shows a partial and schematic view of a wiper device according to a third embodiment,
- Figure 8 shows a partial and schematic view of a wiper device according to a fourth embodiment, and
- Figure 9 shows a partial and schematic view of a wiper device according to a fifth embodiment.

Identical components or respectively components with the same function are provided with the same reference numbers in the figures.

In the description, the longitudinal, vertical and transverse directions will be adopted without limitation as shown in figures by the system (L, V, T) fixed relative to the wiper blade. The longitudinal direction L corresponds to the main direction of the wiper blade. As the wiper device is shown, the horizontal plane corresponds to the plane (L, T).

In the description, the following embodiments are examples. Although the description refers to one or more embodiments, this does not necessarily mean that every reference refers to the same embodiment or that the features apply only to one embodiment. Simple features of different embodiments may also be combined to provide other embodiments.

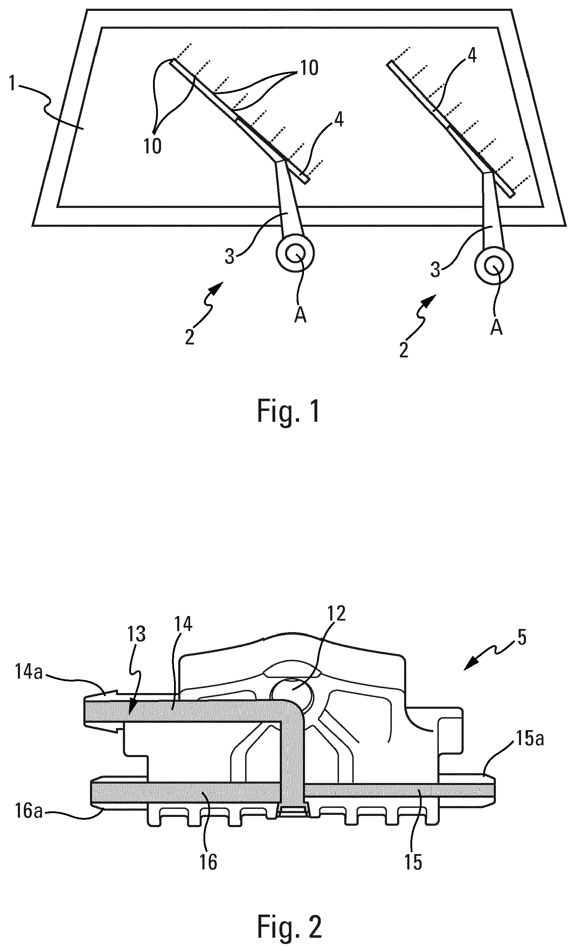

Figure 1 shows a windscreen 1 of a vehicle and two wiper devices 2 for wiping the windscreen 1 respectively in front of the passenger and the conductor of the vehicle.

Each wiper device 2 comprises a wiper arm 3, a wiper blade 4 and a blade connector 5 (figure 2) for connecting the wiper blade 4 to the wiper arm 3.

The wiper arm 3, driven around a pivot axis A when functioning, drives accordingly the wiper blade 4 to follow an angular back and forth movement by means of which the water and/or other undesirable elements covering the windscreen 1 may be evacuated.

The blade connector 5 ensures the connection between the wiper blade 4 and the wiper arm 3. The blade connector 5 is arranged in the middle of the wiper blade 4.

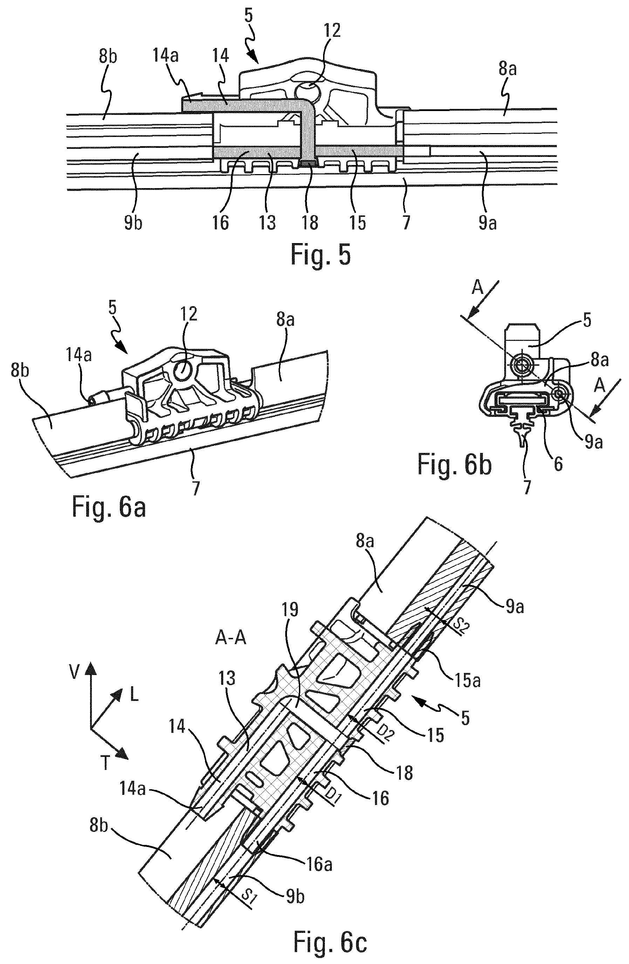

The wiper blade 4 is for example a flat wiper, that is to say of the type comprising a stiffening core 6 and a squeegee blade 7, in particular made of rubber (figure 6b). Said stiffening core 6 may have a curved shape which forces said squeegee blade 7 to take the same curvature so as to facilitate the contact of said squeegee blade 7 with the windscreen 1. The core 6 comprises for example one or two splines.

Said wiper blade 4 may also comprise a spoiler (or aileron) designed to improve the operation of the wiping. More precisely, the purpose of the spoiler is to improve the wiper pressure on the windscreen 1 and thus the aerodynamic performance of the system.

In the illustrated example, the spoiler is made of a distal spoiler 8a (or "external spoiler") and a proximal spoiler 8b (or "inner spoiler"), each one is connected to the blade connector 5, on each side of it (figures 5, 6a). The proximal spoiler 8b is closer to the pivot axis A of the wiper arm 3 than the distal spoiler 8a which is placed further away from it.

A distal fluid channel 9a (or "external fluid channel") is arranged in the distal spoiler 8a. Also, a proximal fluid channel 9b (or "inner fluid channel") is arranged in the proximal spoiler 8b. Distal and proximal fluid channels 9a, 9b extend longitudinally along the longitudinal direction L of the wiper blade 4, respectively on the two opposite sides of the blade connector 5.

In another embodiment, not illustrated, distal and proximal fluid channels are not situated in a spoiler of the wiper blade but fixed to the wiper blade.

The distal and proximal fluid channels 9a, 9b have nozzles 10 to spread washing fluid from the wiper blade 4 onto the windscreen 1 (figure 1).

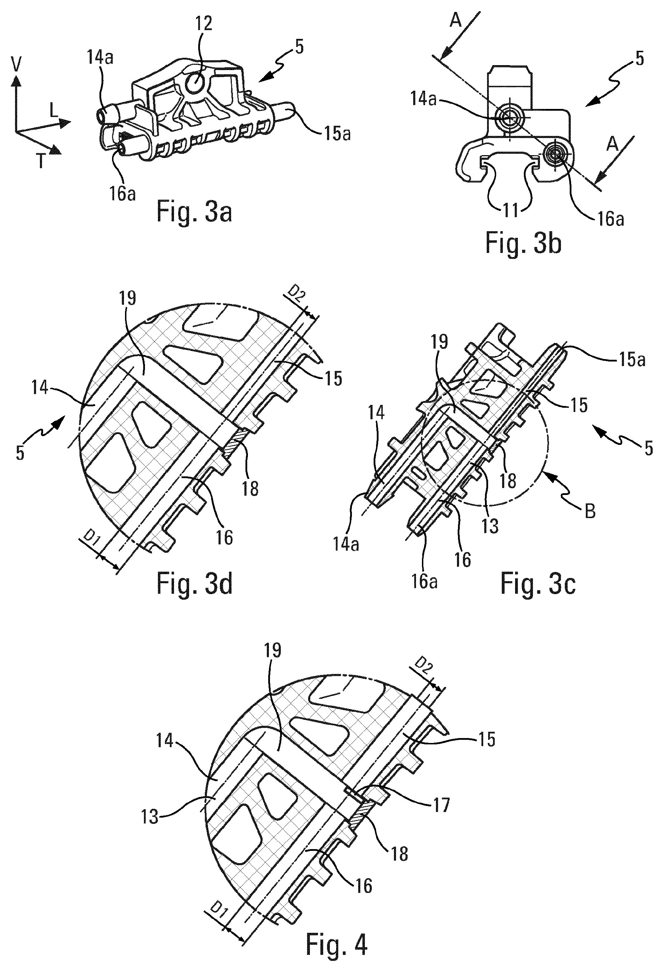

The blade connector 5 is fixed to the wiper blade 4. For this, the base of the connector 5 comprises for example two hooks 11 opposite to each other, defining a shape able to engage a ridge of the wiper blade 4 (figure 3b). In the assembled state, the blade connector 5 surmounts the wiper blade 4 (figure 6a).

The blade connector 5 is also designed to be connected to the wiper arm 3, by a pivot connection. For this, the blade connector 5 comprises for example a transversal hole 12, surmounting the base. The transversal hole 12 is designated to cooperate with a pin (not represented), cylindrical, protruding in the transverse direction, for pivotally cooperating with the wiper arm 3 or an adapter thereof.

The blade connector 5 may be formed in one piece, for example obtained by molding.

According to a first embodiment shown in figures 2, 3a, 3b, 3c, 3d and 4, the blade connector 5 comprises one connector fluid channel 13.

The connector fluid channel 13 has an inlet channel 14 communicating with an outlet distal channel 15 (or "outlet external channel") and an outlet proximal channel 16 (or "outlet inner channel") mounted in derivation.

The end 14a of the inlet channel 14 is destined to be plugged-in a supplying water hose (not represented) which is connected to a pump. The pump is connected to a washing fluid tank of the vehicle to supply the connector fluid channel 13 with washing fluid, like water.

The outlet distal channel 15 and the outlet proximal channel 16 are respectively arranged along two longitudinal opposite sides of the blade connector 5. The outlet proximal channel 16 is closer to the pivot axis A of the wiper arm 3 than the outlet distal channel 15.

The inlet channel 14 may extend longitudinally in parallel with the outlet distal channel 15 and the outlet proximal channel 16. The inlet channel 14 may be arranged on the same side of the blade connector 5 as the outlet proximal channel 16. That's allowing an easier plug of the supplying water hose which is held by the wiper arm 3.

The ends 15a, 16a of the outlet distal channel 15 and the outlet proximal channel 16 are respectively destined to be plugged-in the distal and proximal fluid channels 9a, 9b. To this end, the end 14a of the inlet channel 14 and the ends 15a, 16a of the outlet distal and proximal channels 15, 16 may have truncated shape, to facilitate insertion of the blade connector 5 in flexible hoses.

The connector fluid channel 13 allows driving a washing fluid from the supplying water hose into the distal and proximal fluid channels 9a, 9b.

The outlet distal channel 15 presents a more important pressure drop than the outlet proximal channel 16.

Different pressure drops can be obtained with different dimension of the section of the outlet distal and proximal channel 15, 16. As an example, at least a portion of the outlet distal channel 15 has a smaller diameter D2 than the outlet proximal channel 16's diameter D1.

According to an example visible on figures 2, 3c and 3d, the entire outlet distal channel 15 has a smaller diameter D2 than the outlet proximal channel 16's diameter D1. The section of the outlet proximal channel 16 may have for example the same dimension D1 as the section of the inlet channel 14.

For example, the outlet distal channel 15 has a diameter D2 that is between 1.5 to 3 times smaller than the outlet proximal channel 16's diameter D1. The diameter D1 of the outlet proximal channel 16's section can be for example comprised between 2mm and 3mm, such as being equal to 2.5mm and the diameter D2 of the outlet proximal channel 15 can be comprised between 1mm and 2mm, such as equal to 1.7mm.

According to another embodiment shown in figure 4, the pressure drop is obtained with an obstacle provided into or in front of the outlet distal channel 15. The connector fluid channel 13 may comprise for example a protuberance 17 projecting into or in front of the outlet distal channel 15.

The protuberance 17 may be held by a plug 18 of the blade connector 5 which closes an end of a transversal channel 19 of the connector fluid channel 13 linking the inlet channel14 with outlet distal and proximal channels 15, 16. This embodiment is particularly easy to realize.

The outlet distal channel 15 may have a pressure drop more important than the outlet proximal channel 16 or may have the same pressure drop as represented on figure 4.

Therefore, the same quantity of washing liquid can be projecting on each side of the wiper blade 4. Moreover, this is achieved independently of the size of the nozzle 10 openings and their density to distribute the washing fluid. By means of this configuration, the same number of nozzles 10 and the same nozzle 10 diameter in the distal and proximal fluid channels 9a, 9b can be kept while providing a better homogenous washing projection.

According to a second embodiment shown in figures 5, 6a, 6b and 6c, the distal fluid channel 9a presents a more important pressure drop than the proximal fluid channel 9b.

The blade connector 5 may be the same as the blade connector described in the first embodiment or, may have the same pressure drop for both outlet distal channel 15 and outlet proximal channel 16 (figure 6c).

The pressure drop between distal and proximal fluid channel 9a, 9b, can be obtained with different diameters of the distal and proximal fluid channel 9a, 9b. As example, at least a portion of the distal fluid channel 9a has a smaller diameter S2 than the proximal fluid channel 9b's diameter S1.

According to one embodiment, the entire distal fluid channel 9a has a smaller diameter S2 than the proximal fluid channel 9b's diameter S1.

For example, the distal fluid channel 9a has a diameter S2 that is between 1.5 to 3 times smaller than the proximal fluid channel 9b's diameter S1. The diameter S1 of the proximal fluid channel 9b can be for example comprised between 2mm and 3mm, such as 2.5mm and the diameter S2 of the distal fluid channel 9a can be comprised between 1mm and 2mm, such as 1.7mm.

According to another embodiment, the pressure drop is obtained with an obstacle provided in the distal fluid channel 9a (not shown). The distal spoiler 8a may comprise for example a protuberance projecting into or in front of the distal fluid channel 9a.

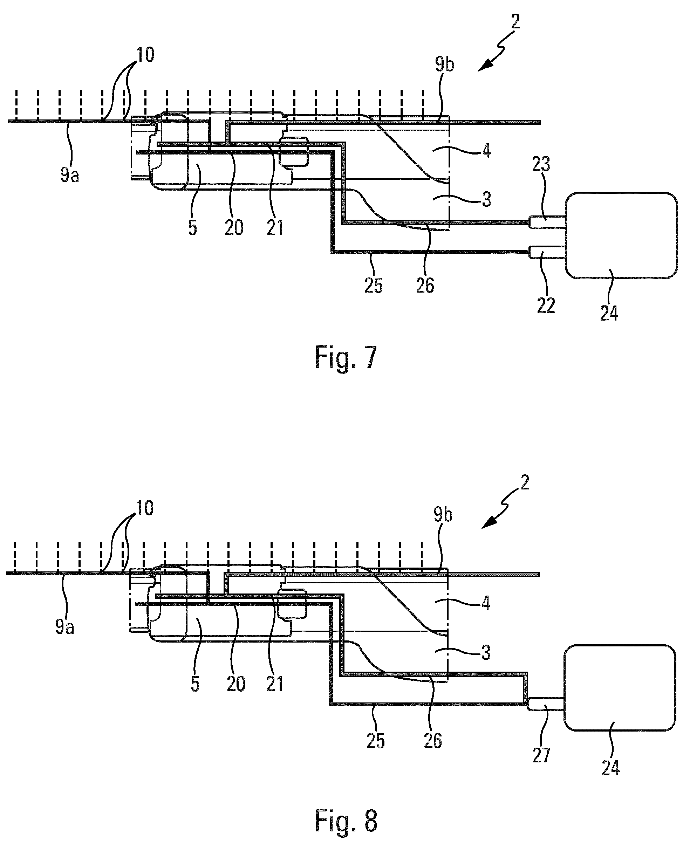

According to a third embodiment shown in figure 7, the blade connector 5 comprises two independent connector fluids channels 20, 21 and the wiper device 2 comprises two independent washing fluid pumps 22, 23.

The blade connector 5 comprises a distal connector fluid channel 20 (or "external connector fluid channel") driving a washing fluid into the distal fluid channel 9a of the wiper blade 4. The distal fluid channel 9a extends longitudinally along a first side of the blade connector 5.

The blade connector 5 comprises a proximal connector fluid channel 21 (or "inner connector fluid channel") driving a washing fluid into the proximal fluid channel 9b of the wiper blade 4. The proximal fluid channel 9b extends longitudinally along a second side of the blade connector 5, opposite to the first side.

A first pump 22 is connected to a first supplying water hose 25 itself connected to the inlet of the distal connector fluid channel 20 of the blade connector 5 to drive a washing fluid from the washing fluid tank 24 to the blade connector 5. And, a second pump 23 is connected to a second supplying water hose 26 itself connected to the inlet of the proximal connector fluid channel 21 of the blade connector 5 to drive a washing fluid from the washing fluid tank 24 to the blade connector 5.

The pumping flowrate of the first pump 22 is less important than the pumping flowrate of the second pump 23.

For example, the pumping flowrate of the first pump 22 is between 1.2 and 1.6, such that 1.47 smaller than the pumping flowrate of the second pump 23. The pumping flowrate of the first pump 22 may be for example comprised between 10ml/s and 25ml/s, such as 17ml/s, and the pumping flowrate of second pump 23 may be for example comprised between 20ml/s and 30ml/s, such as 25ml/s.

According to a fourth embodiment shown in figure 8, the blade connector 5 comprises two independent connector fluids channels 20, 21 and the wiper device 2 comprises two independent supplying water hoses 25, 26 and one washing fluid pump 27.

Such as the previous embodiment, the blade connector 5 comprises a distal connector fluid channel 20 driving a washing fluid into the distal fluid channel 9a of the distal spoiler 8a of the wiper blade 4. The distal fluid channel 9a extends longitudinally along a first side of the blade connector 5.

The blade connector 5 comprises a proximal connector fluid channel 21 driving a washing fluid into the proximal fluid channel 9b of the wiper blade 4. The proximal fluid channel 9b extends longitudinally along a second side of the blade connector 5, opposite to the first side.

A pump 27 is connected to a first supplying water hose 25 itself connected to the inlet of the distal connector fluid channel 20 of the blade connector 5 to drive a washing fluid from the washing fluid tank 24 to the blade connector 5. The pump 27 is also connected to a second supplying water hose 26 itself connected to the inlet of the proximal connector fluid channel 21 of the blade connector 5 to drive a washing fluid from the washing fluid tank 24 to the blade connector 5.

The first supplying water hose 25 presents a more important pressure drop than the second supplying water hose 26.

The pressure drop can be obtained with different diameters of the first and second supplying water hoses 25, 26. As an example, at least a portion of the first supplying water hose 25 has a smaller diameter than the second supplying water hose 26. According to one embodiment shown in figure 8, the entire first supplying water hose 25 has a smaller diameter than the diameter of the second supplying water hose 26.

For example, the first supplying water hose 25's diameter is between 1.5 to 3 times smaller than the diameter of the second supplying water hose 26. For example, the diameter of the second supplying water hose 26 is comprised between 2mm and 3 mm, such as 2.5mm and the diameter of first supplying water hose 25 is comprised between 1mm and 2 mm, such as being of 1.7mm.

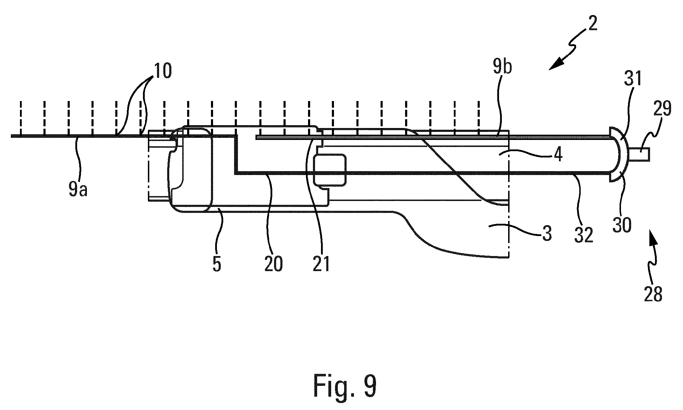

According to a fifth embodiment shown in figure 9, the wiper device 2 comprises a blade connector 5 having only one distal connector fluid channel 20.

A first end 20a of the distal connector fluid channel 20 is connected to the distal fluid channel 9a of the wiper blade 4. The distal fluid channel 9a extends through a first side of the blade connector 5.

The wiper device 2 further comprises two end clips 28 plugged one on each end of the wiper blade 4, a proximal end clip 28 (or "inner end clip") and a distal end clip (or "external end clip", not shown). The proximal end clip 28 is closer to the pivot axis A of the wiper arm 3 than the distal end clip located further away from it.

The proximal end clip 28 comprises an end clip fluid channel comprising an inlet 29 which communicate with a first and a second fluid channel 30, 31 mounted in derivation. There is no end clip fluid channel in the distal end clip of the illustrated embodiment.

The inlet 29 is destined to be plugged-in a supplying water hose (not represented) which is connected to a pump itself connected to a washing fluid tank of the vehicle to supply the end clip fluid channel with washing fluid.

The first fluid channel 30 is connected to a pipe 32 of the wiper blade 4. The pipe 32 is connected to the second end 20b of the distal connector fluid channel 20 which is connected to the distal fluid channel 9a, for driving a washing fluid to the wiper blade 4.

The second fluid channel 31 is connected to the proximal fluid channel 9b of the wiper blade 4 extending longitudinally along a second side of the blade connector opposite to the first side.

The first fluid channel 30 presents a more important pressure drop than the second fluid channel 31.

As described previously, different pressure drops can be obtained with different dimension of the section of the first and second fluid channel 30, 31. As an example, the entire first fluid channel 30 has a smaller diameter than the second fluid channel 31. Therefore, the same quantity of washing liquid can be projected on each side of the wiper blade 4, independently of the size of the nozzle openings and their density to distribute the washing fluid.

## Claims

1. Blade connector (5) for connecting a wiper blade (4) to a wiper arm (3) of a vehicle, the blade connector (5) comprising a connector fluid channel (13) for driving a washing fluid into a distal fluid channel (9a) and a proximal fluid channel (9b) of the wiper blade (4) to spread washing fluid from the wiper blade (4) onto a windscreen (1) of a vehicle, the connector fluid channel (13) having :
- an inlet channel (14) which end (14a) is destined to be plugged-in a supplying water hose,
- an outlet distal channel (15) and an outlet proximal channel (16) being respectively arranged along two longitudinal opposite sides of the blade connector (5), and which ends (15a, 16a) are respectively destined to be plugged-in the distal and proximal fluid channels (9a, 9b) of the wiper blade (4),
- wherein the outlet distal channel (15) presents a more important pressure drop than the outlet proximal channel (16).

2. Blade connector (5) according to the previous claim, wherein at least a portion of the outlet distal channel (15) presents a smaller diameter (D2) than the outlet proximal channel (16)'s diameter (D1).

3. Blade connector (5) according to one of the previous claims, wherein the entire outlet distal channel (15) presents a smaller diameter (D2) than the outlet proximal channel (16)'s diameter (D1).

4. Blade connector (5) according to one of the previous claims, wherein the outlet distal channel (15) presents a diameter (D2) that is between 1. 5 to 3 times smaller than the outlet proximal channel (16)'s diameter (D1).

5. Blade connector (5) according to one of the previous claims, wherein the connector fluid channel (13) comprises a protuberance (17) projecting into or in front of the outlet distal channel (15).

6. Blade connector (5) according to the previous claim, wherein the protuberance (17) is held by a plug (18) of the blade connector (5) which closes an end of a transversal channel (19) of the connector fluid channel (13) linking the inlet channel (14) with the outlet distal and proximal channels (15, 16).

7. Blade connector (5) according to one of the previous claims, wherein the inlet channel (14) extends longitudinally in parallel with the outlet proximal and distal channels (16, 15), the inlet channel (14) being arranged on the same side of the blade connector (5) than the outlet proximal channel (16).

8. Wiper blade (4) comprising a distal and a proximal spoilers (8a, 8b) which comprise respectively a distal and a proximal fluid channels (9a, 9b) which extend longitudinally and respectively along the two opposite sides of the wiper blade (4), the distal and proximal fluid channels (9a, 9b) having nozzles (10) to spread washing fluid from the wiper blade (4) onto a windscreen (1) of a vehicle, wherein the distal fluid channel (9a) presents a more important pressure drop than the proximal fluid channel (9b).

9. Wiper blade (4) according to the previous claim, wherein at least a portion of the distal fluid channel (9a) presents a smaller diameter (S2) than the proximal fluid channel (9b)'s diameter (S1).

10. Wiper blade (4) according to one of claims 8 or 9, wherein the entire distal fluid channel (9a) presents a smaller diameter (S2) than the proximal fluid channel (9b)'s diameter (S1).

11. Wiper blade (4) according to one of claims 8 to 10, wherein the distal fluid channel (9a) presents a diameter (S2) that is between 1.5 to 3 times smaller than the proximal fluid channel (9b)'s diameter (S1).

12. Wiper device (2) comprising a blade connector (5) for connecting a wiper blade (4) to a wiper arm (3), the blade connector (5) comprising a distal and a proximal connector fluid channels (20, 21) for respectively driving a washing fluid into a distal and a proximal fluid channels (9a, 9b) of the wiper blade (4) having nozzles (10) to spread washing fluid from the wiper blade (4) onto a windscreen (1) of a vehicle, said distal and proximal fluid channels (9a, 9b) extending longitudinally respectively along two opposite sides of the blade connector (5), wherein said wiper device (2) also comprises a first and a second pumps (22, 23) for driving a washing fluid from a washing fluid tank (24) to respectively the distal and proximal connector fluid channels (20, 21) of the blade connector (5), the pumping flowrate of the first pump (22) being less important than the pumping flowrate of the second pump (23).

13. Wiper device (2) according to the previous claim, wherein the pumping flowrate of the first pump (22) is between 1.2 and 1.6 smaller than the pumping flowrate of the second pump (23).

14. Wiper device (2) comprising a blade connector (5) for connecting a wiper blade (4) to a wiper arm (3), the blade connector (5) comprising a distal and a proximal connector fluid channels (20, 21) for respectively driving a washing fluid into a distal and a proximal fluid channels (9a, 9b) of the wiper blade (4) having nozzles (10) to spread a washing fluid from the wiper blade (4) onto a windscreen (1) of a vehicle, said distal and proximal fluid channels (9a, 9b) extending longitudinally respectively along two opposite sides of the blade connector (5), wherein said wiper device (2) also comprises a first and a second supplying water hoses (25, 26) for driving a washing fluid from a pump (27) to respectively the distal and proximal connector fluid channels (20, 21) of the blade connector (5), the first supplying water hose (25) having a pressure drop more important than the second supplying water hose (26).

15. Wiper device (2) according to the previous claim, wherein at least a portion of the first supplying water hose (25) presents a smaller diameter than the second supplying water hose (26) diameter.

16. Wiper device (2) according to one of claims 14 or 15, wherein the entire first supplying water hose (25) presents a smaller diameter than the second supplying water hose (26)'s diameter.

17. Wiper device (2) comprising :
- a wiper blade (4),
- a blade connector (5) for connecting the wiper blade (4) to a wiper arm (3), the blade connector (5) comprising one distal connector fluid channel (20) connected to a distal fluid channel (9a) of the wiper blade (4) which extends through a first side of the blade connector (5),
- a proximal end clip (28) comprising :
- a first fluid channel (30) connected to the distal connector fluid channel (20) via a pipe (32) of the wiper blade (4) for driving a washing fluid to wiper blade (4), and
- a second fluid channel (31) connected to a proximal fluid channel (9b) of the wiper blade (4) extending longitudinally along a second side of the blade connector (5) opposite to the first side, the distal and proximal fluid channels (9a, 9b) having nozzles (10) to spread washing fluid from the wiper blade (4) onto a windscreen (1) of a vehicle,
- wherein the first fluid channel (30) presents a more important pressure drop than the second fluid channel (31).
